# EUROPEAN PATENT APPLICATION

(11) **EP 2 690 561 A1**
(43) Date of publication of application: **29.01.2014**
(21) Application number: 11861692.9
(22) Date of filing: 22.03.2011
(51) Int. Cl.: G06F 12/08

(54) **PROCESSING UNIT, INFORMATION PROCESSING DEVICE AND METHOD OF CONTROLLING PROCESSING UNIT**

(71) Applicant: Fujitsu Limited, Kawasaki-shi, Kanagawa 211-8588 (JP)
(72) Inventor: HIKICHI, Toru, Kawasaki-shi, Kanagawa 211-8588 (JP); HONDO, Mikio, Kawasaki-shi, Kanagawa 211-8588 (JP)
(74) Representative: Fenlon, Christine Lesley
(86) International application number: PCT/JP2011/056846
(87) International publication number: WO 2012/127628

(57) **Abstract**

A request storing unit (110) in a PF port (100) stores an expanded request. A PF port entry selecting unit (140) controls two pre-fetch requests expanded from the expanded request to consecutively be input to a L2-pipe (23). When only one of the expanded two pre-fetch requests is aborted, the PF port entry selecting unit (140) further controls the requests such that the aborted pre-fetch request is input to the L2-pipe (23) as the highest priority request. Further, the PF port entry selecting unit (140) receives the number of available resources from a resource managing unit (301) in order to select a pre-fetch request to be input to a pipe inputting unit (200) based on the number of available resources.

## Description

### [Technical Field]

The present invention relates to a processor, an information processing apparatus, and a control method of the processor.

### [Background Art]

A main memory sometimes consecutively processes contiguous cache lines in an information processing apparatus that includes a processor having a cache memory connected to the main memory. This can improve the transfer throughput between the memory and the cache memory. For example, when consecutively accessing columns adjacent to each other in the same row, a Double Data Rate 3 (DDR3) -Synchronous Dynamic Random Access Memory (SDRAM) can consecutively access the columns without closing the pages that are units in which the main memory stores data. This improves the transfer throughput between the main memory and the cache memory better than when each page is closed every time after the page has been accessed.

However, in a conventional control of a cache memory, the main memory does not manage data in units of cache lines as a cache memory does and the processing is performed per a set of data items in the main memory even when software requires a larger contiguous address area than a line size that is a size for the cache line of the cache memory.

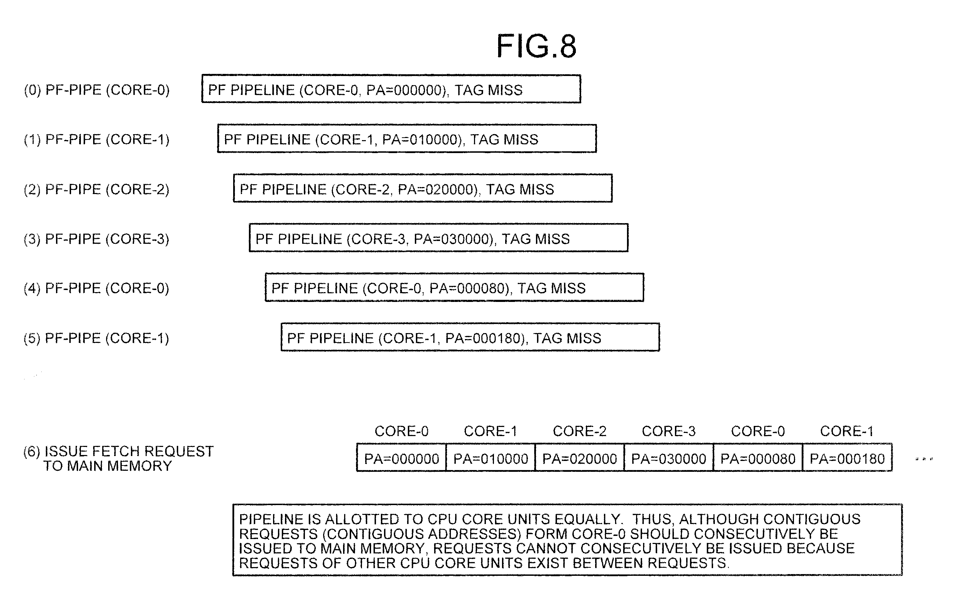

FIG. 8 illustrates an exemplary control in a conventional cache memory control unit. In FIG. 8, the "PF-PIPE (CORE-n)" indicates a pipeline process for the pre-fetch for processing a pre-fetch request from a Central Processing Unit (CPU) core unit n. Further, the "PF pipeline (CORE-n, PA = xxxxxx), tag miss" indicates that a tag miss occurs without hitting a tag in the cache memory after the tag has been searched by the pipeline process performed in response to the pre-fetch instruction of a physical address xxxxxx from the CPU core unit n.

In other words, in FIG. 8, the pre-fetch instructions from CPU core units 0, 1, 2, 3, 0, and 1 are sequentially pipeline-processed and tag misses sequentially occur. As a result of that, the fetch requests to a memory or, namely, the main memory are issued to the physical addresses "000000", "010000", "020000", "030000", "000080", and "000180" in hexadecimal form.

### [Citation List]

### [Patent Literature]

Patent Literature 1: Japanese Laid-open Patent Publication No. 1-261780
Patent Literature 2: Japanese Laid-open Patent Publication No. 5-143448

### [Summary of invention]

### [Technical Problem]

As an example, it is assumed in FIG. 8 that the cache line size is 128 bytes and the main memory has a function to improve the transfer throughput between the main memory and the cache memory by consecutively processing data of 256 bytes equal to two cache lines' bytes. If two fetch requests to the physical addresses "000000" and "000080" from a CPU core unit 0 can consecutively be issued to the main memory at that time, this can improve the transfer throughput between the main memory and the cache memory.

However, pre-fetch instructions from a plurality of CPU core units are sequentially processed in a conventional control of a cache memory. Thus, there is a problem in that a conventional cache memory control unit cannot consecutively issue, to the main memory, the fetch requests to the physical addresses "000000" and "000080" from the CPU core unit 0. In other words, there is a problem in that a conventional cache memory control unit cannot consecutively issue the fetch requests of the contiguous cache lines to the main memory.

An objective of an aspect of the disclosed technique is to provide a processor, an information processing apparatus, and a control method of the processor that are capable of improving the transfer throughput of a main memory.

### [Solution to Problem]

A processor disclosed by the present invention, as an embodiment, includes a cache memory having a plurality of cache lines each holding data. The processor includes a request holding unit that holds a plurality of access requests to a plurality of contiguous cache lines in the cache memory while linking the requests to each other and a control unit that consecutively issues the plurality of linked access requests to the main memory. The processor includes a processing unit that registers a plurality of response data from the main memory in response to the plurality of consecutively issued access requests to the contiguous cache lines in the cache memory.

### [Advantageous Effects of Invention]

An aspect of the present disclosed processor has the effect of improving the transfer throughput of a main memory.

### [Brief Description of Drawings] (BRIEF DESCRIPTION OF DRAWINGS)

FIG. 1 is a view of an exemplary control of a cache memory control unit according to the present embodiment.
FIG. 2 is a view of the configuration of a CPU according to the present embodiment.
FIG. 3 is a view of the configuration of a PF port illustrated in FIG. 2.
FIG. 4 is a view of the configuration of an entry valid signal setting unit.
FIG. 5 is a flowchart for describing the procedures of the process in a PF port entry selecting unit.
FIG. 6 is a view of another exemplary control of a cache memory control unit according to the present embodiment.
FIG. 7 is an exemplary program of STREAM processing.
FIG. 8 is an exemplary control of a conventional cache memory control unit.

### [Embodiments for Carrying Out the Invention]

Hereinafter, the embodiment of a processor, an information processing apparatus, and a control method of the processor that are disclosed in the present application will be described in detail with reference to the drawings. Note that the present embodiment does not limit the disclosed technique.

### (Embodiment)

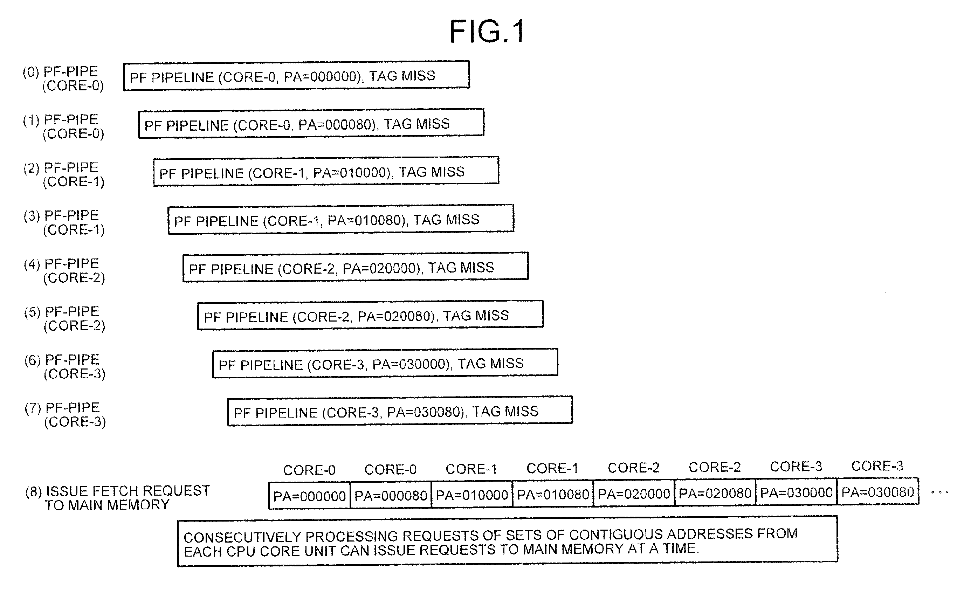

First, an exemplary control of a cache memory control unit according to the present embodiment will be described. FIG. 1 is a view of an exemplary control of the cache memory control unit according to the present embodiment. Note that, similarly to in FIG. 8, the cache line size is 128 bytes and a main memory has a function to improve the transfer throughput between the main memory and the cache memory by consecutively processing data of 256 bytes equal to contiguous two cache lines' bytes in FIG. 1 as an example.

As illustrated in FIG. 1, the cache memory control unit according to the present embodiment consecutively processes pre-fetch requests to physical addresses "xxxx00" and "xxxx80" denoted in hexadecimal form from each CPU core unit. The "xxxx" part of the physical address is "0000" in the CPU core unit 0, "0100" in the CPU core unit. 1, "0200" in the CPU core unit 2, and "0300" in the CPU core unit 3 in the example of FIG. 1.

As described above, the cache memory control unit according to the present embodiment consecutively processes the pre-fetch requests to the physical addresses "xxxx00" and "xxxx80" from each of the CPU core units. Thus, the cache memory control unit according to the present embodiment can consecutively issue, to the main memory, fetch requests to the physical addresses "xxxx00" and "xxxx80". As a result of that, when the main memory consecutively processes the contiguous areas that are two cache lines of the physical addresses "xxxx00" and "xxxx80" and this improves the transfer throughput between the main memory and the cache memory, the transfer throughput of the main memory is improved.

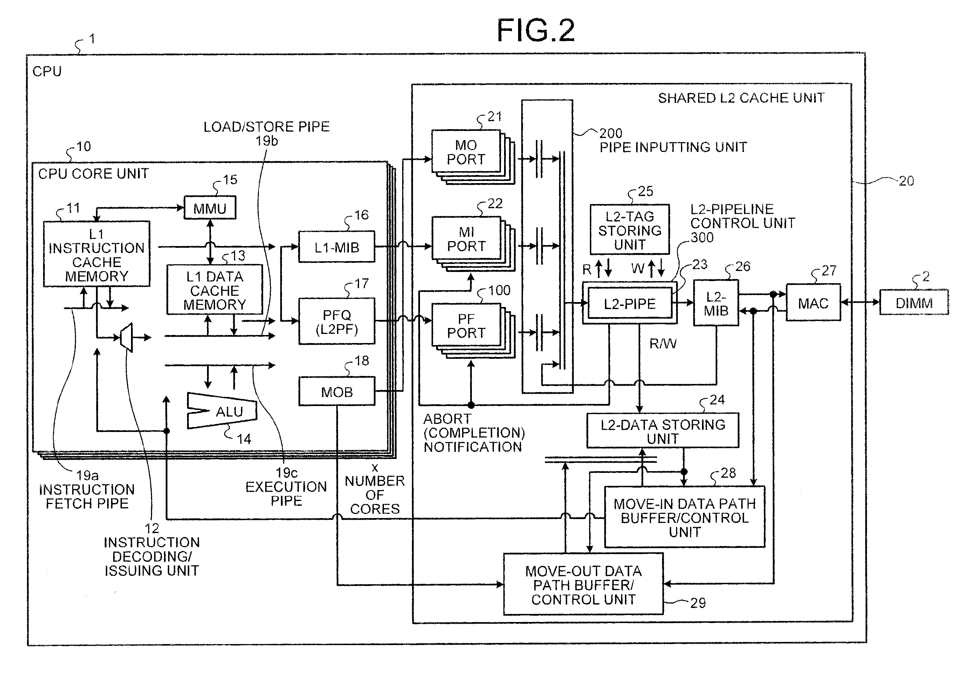

Next, the CPU according to the present embodiment will be described. FIG. 2 is a view of the configuration of a CPU according to the present embodiment. As illustrated in FIG. 2, a CPU 1 includes four CPU core units 10 and a shared L2 cache unit 20 where the four CPU core units 10 are shared. Note that, although the case in which the CPU 1 includes the four CPU core units 10 will be described herein as an example, the CPU 1 can include the number except four of CPU core units 10.

Each of the CPU core units 10 is a core of the CPU 1 and includes an L1 instruction cache memory 11, an instruction decoding/issuing unit 12, an L1 data cache memory 13, an Arithmetic Logic Unit (ALU) 14, and a Memory Management Unit (MMU) 15. The CPU core unit 10 further includes a Level-1 Move In Buffer (L1-MIB) 16, a Pre-Fetch Queue (PFQ) 17, a Move Out Buffer (MOB) 18, an instruction fetch pipe 19a, a load/store pipe 19b, and an execution pipe 19c.

The L1 instruction cache memory 11 is a primary cache memory configured to store an instruction. The instruction decoding/issuing unit 12 decodes and issues the instruction stored in the L1 instruction cache memory 11. The L1 data cache memory 13 is a primary cache memory configured to store data. The ALU 14 performs an arithmetic operation and a logical operation based on the instruction issued from the instruction decoding/issuing unit 12.

The MMU 15 converts a virtual address into a physical address. The L1-MIB 16 is a buffer configured to store a demand (DM) request to the shared L2 cache unit 20. Herein, the DM request is a data read request to a secondary cache memory or the main memory due to a primary cache miss of a Load instruction or a Store instruction.

The PFQ 17 is a queue configured to store a pre-fetch request to the shared L2 cache unit (Level-2 Cache Memory Unit) 20. The MOB 18 is a buffer configured to store a data write request (Move-out request) to the shared L2 cache unit 20.

The instruction fetch pipe 19a is a pipeline configured to perform a process for reading an instruction from the L1 instruction cache memory 11. The load/store pipe 19b is a pipeline configured to perform a process for loading data and a process for storing data. The execution pipe 19c is a pipeline configured to perform a process for executing an instruction.

The shared L2 cache unit 20 is a secondary cache memory unit shared by the four CPU core units 10 and includes four Move Out Ports (MO ports) 21, four Move In Ports (MI ports) 22, four Prefetch Ports (PF ports) 100, and a pipe inputting unit 200. The shared L2 cache unit 20 further includes an L2-data storing unit. 24, an L2-tag storing unit 25, an L2-pipeline control unit 300, an L2-MIB 26, and Memory Access Controller (MAC) 27. The shared L2 cache unit 20 further includes a Move-in data path buffer/control unit 28, and a Move-out data path buffer/control unit 29. In that case, the components of the shared L2 cache unit 20 except for the L2-data storing unit 24 work as an L2-cache memory control unit that controls the secondary cache memory unit.

The MO ports 21 receive data write requests from the CPU core units 10 and select the received data write requests in the order of their occurrence to issue the requests to the pipe inputting unit 200. The four MO ports 21 correspond to the four CPU core units 10, respectively.

The MI ports 22 receive DM requests from the CPU core units 10 and select the received DM requests in the order of their occurrence to issue the requests to the pipe inputting unit 200. The four MI ports 22 correspond to the four CPU core units 10, respectively.

The PF ports 100 receive pre-fetch requests from the CPU core units 10 and select the received pre-fetch requests in the order of their occurrence to issue the requests to the pipe inputting unit 200. The four PF ports 100 correspond to the four CPU core units 10, respectively.

The pipe inputting unit 200 selects requests from among the requests issued by the four PF ports 100 so as to select the requests in the CPU core units 10 as equally as possible with a Least Recently Used (LRU) or a round robin. The pipe inputting unit 200 also selects requests from among the requests issued from the four MO ports 21 and MI ports 22 so as to select the requests in the CPU core units 10 as equally as possible.

The pipe inputting unit 200 further selects requests, based on the priority, from among the requests selected in four PF ports 100, the requests selected in four MO ports 21, the requests selected in four MI ports 22, and the requests issued from the L2-MIB 26 in order to input the selected requests to an L2-pipe 23. Herein, the L2-pipe 23 is a pipeline controlled by the L2-pipeline control unit 300.

The L2-data storing unit 24 stores secondary cache data. The L2-tag storing unit 25 stores the tag of the data stored in the L2-data storing unit 24. The L2-pipe 23 searches a tag corresponding to the physical address included in the input request from the L2-tag storing unit 25 in order to perform a process according to the search result.

In other words, when a tag is searched from the L2-tag storing unit 25, the L2-pipe 23 performs a control to access the L2-data storing unit 24. On the other hand, when the tag is not searched from the L2-tag storing unit 25, the L2-pipe 23 stores the request in the L2-MIB 26 when the request is a DM request or a pre-fetch request. On the other hand, when the request is a data write request and the tag is not searched from the L2-tag storing unit 25, the L2-pipe 23 performs a control such that the data is written into the L2-data storing unit 24 and the main memory.

Further, when the process for each request has normally been completed, the L2-pipe 23 notifies the completion to the MI port 22 and the PF port 100. When the process for each request has been aborted, the L2-pipe 23 notifies the abort to the MI port 22 and the PF port 100.

The L2-MIB (Level-2 Move In Buffer) 26 stores a data read request (Move-in request) to the main memory. The data read request stored in the L2-MIB 26 is input to the L2-pipe 23 with the pipe inputting unit 200 again when the data is read from the main memory. The data read request input again causes the writing of the data to the L2-data storing unit 24 and the registration of the tag to the L2-tag storing unit 25.

The MAC 27 controls the access to a Dual Inline Memory Module (DIMM) 2 working as the main memory. The Move-in data path buffer/control unit 28, for example, writes the data read from the main memory to the L2-data storing unit 24 and transfers the data to the CPU core units 10. The Move-out data path buffer/control unit 29, for example, writes the data output from the CPU core units 10 to the L2-data storing unit 24 and transfers the data to the MAC 27. Note that the CPU 1 and the DIMM 2 work as the parts of the information processing apparatus.

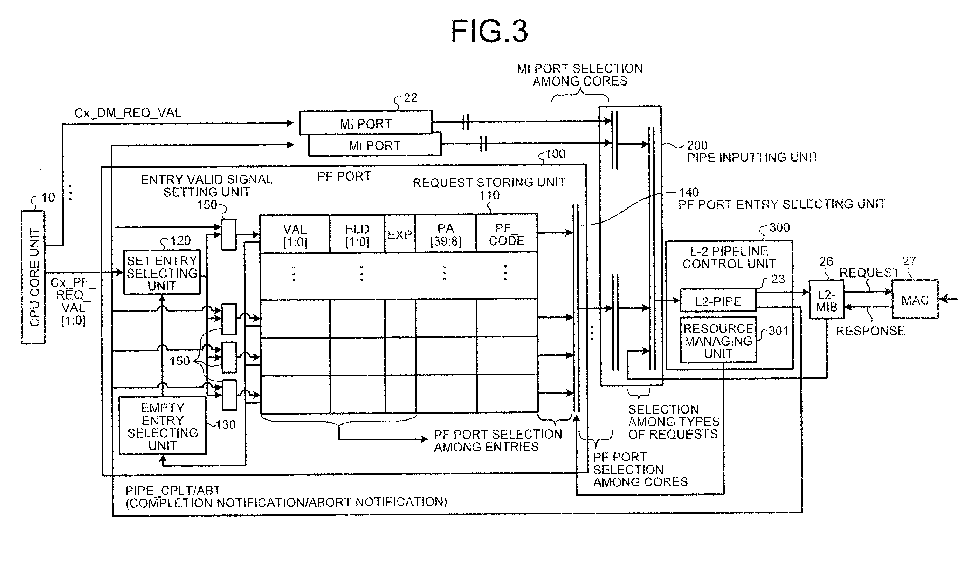

Next, the configuration of the PF port 100 illustrated in FIG. 2 will be described. FIG. 3 is a view of the configuration of the PF port 100 illustrated in FIG. 2. As illustrated in FIG. 3, the PF port 100 includes a request storing unit 110, a set entry selecting unit 120, and an empty entry selecting unit 130, a PF port entry selecting unit 140, and an entry valid signal setting unit 150.

The request storing unit 110 includes, for example, eight entries in order to store a pre-fetch request in each entry. Here, the request storing unit 110 can store, as an entry, for example, an expanded request to be expanded to two request as the requests to contiguous two cache lines. Note that the expanded request may be expanded to three or more requests to three or more cache lines.

Each of the entries includes fields VAL [1:0], HLD [1:0], EXP, PA [39:8], and PF_CODE as illustrated in FIG. 3. Here, the Physical Address (PA) denotes the physical address of the cache line to be pre-fetched. The [I:m] denotes I - m + 1 bits from a bit m to a bit I. Hereinafter, [n] denotes a bit n.

The VAL (valid) [1:0] indicates whether the entry is valid. The VAL [1] and the VAL [0] indicate the validity of the pre-fetch requests of the contiguous two cache lines corresponding to PA [7] = 1 and PA [7] = 0, respectively. The VAL [1:0] indicates that the entry corresponding to the case in which the value is "1" is valid. The EXP (Expand) is a flag that shows whether the entry is an expanded request or a single request. That the EXP is "1" means that the entry is an expanded request. When the pre-fetch request from the CPU core units 10 is an expanded request, VAL [1:0] = 11 and EXP = 1 are set. On the other hand, when the pre-fetch request from the CPU core units 10 is a single request that is not expanded, only a VAL corresponding to the PA [7] is set and then EXP = 0 is set. The HLD [1:0] indicates whether the pre-fetch request is currently processed with the L2-pipe 23. The HLD [1] and the HLD [0] indicate, respectively, whether the contiguous two pre-fetch requests corresponding to the PA [7] = 1 and the PA [7] = 0 are currently processed. The PF_CODE indicates a type of the request for exclusion or the like. The HLD [1:0] indicates that the pre-fetch request is currently processed when the value is "1".

The set entry selecting unit 120 stores the pre-fetch request from the CPU core unit 10 in the request storing unit 110. The empty entry selecting unit 130 selects an empty entry in the request storing unit 110 using the VAL [1:0]. The set entry selecting unit 120 stores the pre-fetch request from a CPU core unit 10 in the empty entry selected by the empty entry selecting unit 130. Note that an empty entry is an entry in which VAL [1:0] = 00 holds.

The PF port entry selecting unit 140 selects a request from the valid entries stored in the request storing unit 110 in the order of their occurrence in order to issue the request to the pipe inputting unit 200. Here, the valid entry is an entry in which the VAL [1] or the VAL [0] has a value of one. When the request is an expanded request, the PF port entry selecting unit 140 consecutively issues two requests expanded from the expanded request to the pipe inputting unit 200 and controls the pipe inputting unit 200 to input the contiguous two requests to the L2-pipe 23 using the priority.

As described above, the PF port entry selecting unit 140 consecutively issues two requests expanded from an expanded request to the pipe inputting unit 200 when the request is the expanded request. This enables the main memory to consecutively process contiguous two cache lines.

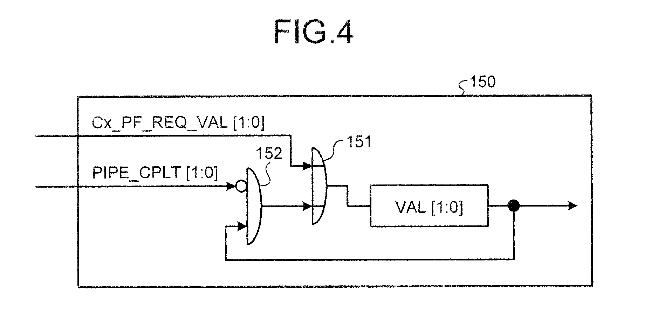

The entry valid signal setting unit 250 sets the VAL [1:0] in each of the entries. FIG. 4 is a view of the configuration of the entry valid signal setting unit 150. As illustrated in FIG. 4, an OR circuit 151 inputs a pre-fetch request signal Cx_PF_REQ_VAL [1:0] from the CPU core unit 10 in order to set the VAL [1:0] in each of the entries.

Further, the entry valid signal setting unit 150 updates the VAL [1:0] in each of the entries based on the result from the pipeline process in the L2-pipe 23. The pipeline process with the L2-pipe 23 has the results: the completion when the process is valid and the abort when the process is aborted. The L2-pipe 23 notifies the result from the pipeline process together with the entry number n to the PF port 100.

When the pipeline processes have been completed as the result, the negation of the signal PIPE_CPLT [1:0] indicating the completion from the L2-pipe 23 is input to an AND circuit 152. The entry valid signal setting unit 150 updates the bit corresponding to the VAL [1:0] to zero through the OR circuit 151. When the process of the two expanded requests has been completed while the pre-fetch request has been an expanded request, the VAL [1:0] = 00 holds and the entry is opened. The opened entry becomes an object to be selected with the empty entry selecting unit 130.

On the other hand, when the pipeline process has been aborted as the result, the bit corresponding to the VAL [1:0] is not updated. When the request is an expanded request, the expanded two requests are temporally consecutively pipeline-processed. However, the requests are separately pipeline-processed. Thus, there are circumstances when one of the two pipeline processes has been completed and the other has been aborted. In that case, the PF port entry selecting unit 140 selects the aborted request as giving higher priority to the aborted request over the other requests in order to issue the aborted request to the pipe inputting unit 200 again.

As described above, when only one of the expanded two requests has been aborted, the PF port entry selecting unit 140 selects the aborted request as the highest priority request. This enables the main memory to consecutively process contiguous two cache lines.

Note that, to avoid the abort of only one of the two requests that need to consecutively process, the pipeline can be stalled until the condition of the abort is resolved. However, when a pipeline is stalled, it is necessary to drastically change the configuration of the control circuit or the like in the pipeline. This causes the configuration of the control circuit in the pipeline to largely depend on the characteristics of the main memory. Thus, it is necessary to drastically change the cache pipeline control according to each main memory to which the circuit is connected.

On the other hand, when only one of the expanded two requests has been aborted, the aborted request is processed as being given higher priority over the other requests as described in the present embodiment. This can prevent the configuration of the control circuit in the pipeline from depending on the characteristics of the main memory.

A cause of the abort is the depletion of resources, for example, in a Move-In Buffer (MIB). A cache pipeline has a higher process throughput than a main memory does. Thus, the depletion of resources such as an MIB resource easily occurs even when the main memory transfers the resource with the maximum performance.

Thus, the L2-pipeline control unit 300 includes a resource managing unit 301 configured to manage the resources in the MIB or the like. The PF port entry selecting unit 140 receives, from the resource managing unit 301, a level signal RESOURCE_AVAIL that indicates how many resources in the MIB or the like can be available in order to select a request to be input to the pipe inputting unit 200 based on the level signal.

In other words, when RESOURCE_AVAIL ≥ 2 holds, the PF port entry selecting unit 140 selects one of the pre-fetch requests of all the valid entries. When RESOURCE_AVAIL = 1 holds, the PF port entry selecting unit 140 selects one of the pre-fetch requests of the entries in which VAL [1:0] = 01 or VAL [1:0] = 10 holds. Especially, the PF port entry selecting unit 140 selects the pre-fetch request of the entry in which EXP = 1 holds as being giving higher priority over the pre-fetch request of the entry in which EXP = 0 holds. When RESOURCE_AVAIL = 0 holds, the PF port entry selecting unit 140 restrains the pre-fetch request from being input to the pipe inputting unit 200.

As described above, the PF port entry selecting unit 140 selects a pre-fetch request based on the available resource in the MIB. This can control the pre-fetch request input to the L2-pipe 23 not to be aborted. Further, even when only one of expanded requests has been aborted due to the depletion of resources, the aborted pre-fetch request can be controlled to be selected as being given higher priority over the other pre-fetch requests at the time when the value of the RESOURCE_AVAIL has changed from zero to one.

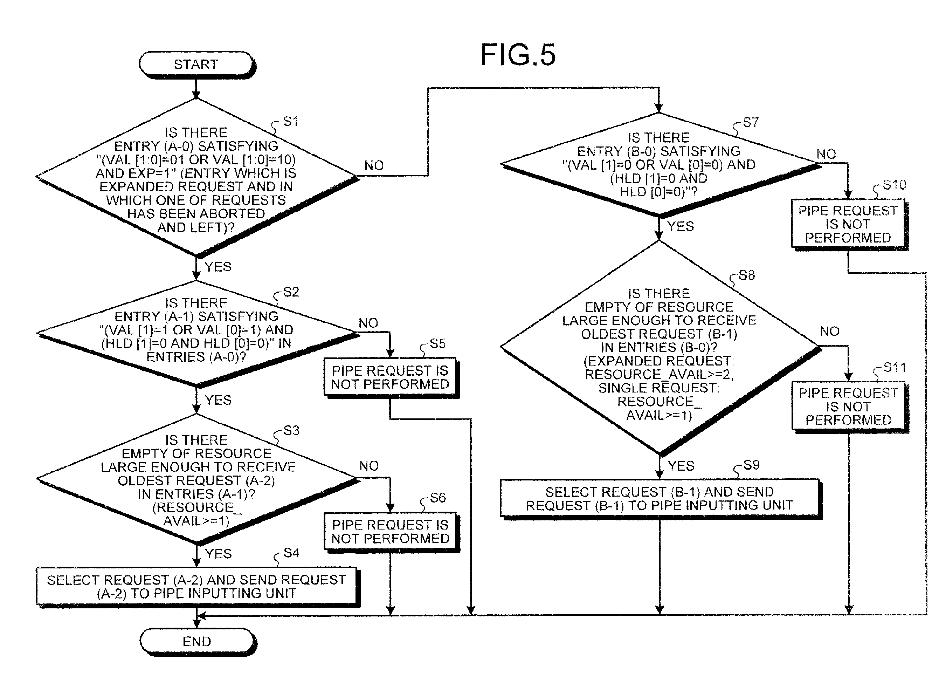

Next, the procedures of the process in the PF port entry selecting unit 140 will be described. FIG. 5 is a flowchart for describing the procedures of the process in the PF port entry selecting unit 140. As illustrated in FIG. 5, the PF port entry selecting unit 140 determines whether there is an entry (A - 0) in which "(VAL [1:0] = 01 or VAL [1:0] = 10) and EXP = 1" holds (step S1). In other words, the PF port entry selecting unit 140 determines whether there is an entry (A - 0) which is an expanded request and in which a pre-fetch request included in the expanded request has been aborted and left.

As a result of that, when there are the entries (A - 0), the PF port entry selecting unit 140 determines whether the entries (A - 0) include an entry y (A - 1) satisfying the condition in that "(VAL [1] = 1 or VAL [0] = 1) and (HLD [1] = 0 and HLD [0] = 0)" hold (step S2). In other words, the PF port entry selecting unit 140 determines whether there is an entry (A - 1) that is not currently input to the L2-pipe 23 in the entries (A - 0).

As a result of that, when an entry (A - 1) that is not currently input to the L2-pipe 23 is included in the entries (A - 0), the PF port entry selecting unit 140 determines whether the MIB has an empty as the resource large enough to receive the oldest request (A - 2) in the entries (A - 0) (step S3).

As a result of that, when the MIB has an empty as the resource, the PF port entry selecting unit 140 selects the request (A - 2) and sends the request to the pipe inputting unit 200 (step S4). When the MIB does not have an empty as the resource, the PF port entry selecting unit 140 does not perform a pipe request or, namely, a request for the process in the L2-pipe 23 (step S6). The PF port entry selecting unit 140 also does not perform a pipe request when an entry (A - 1) is not included (step S5).

On the other hand, when there is not an entry (A - 0), the PF port entry selecting unit 140 determines whether there is an entry (B - 0) satisfying the condition in that "(VAL [1] = 0 or VAL [0] = 0) and (HLD [1] = 0 and HLD [0] = 0) " hold (step S7). In other words, the PF port entry selecting unit 140 determines whether there is a valid entry (B - 0) that is currently not input to the L2-pipe 23.

As a result of that, when there is a valid entry (B - 0) that is currently not input to the L2-pipe 23, the PF port entry selecting unit 140 determines whether the MIB has an empty large enough to receive the oldest request (B - 1) in theentries (B - 0) (step S8).

As a result of that, when the MIB has an empty, the PF port entry selecting unit 140 selects the request (B - 1) and sends the request to the pipe inputting unit 200 (step S9). When the MIB does not have an empty, the PF port entry selecting unit 140 does not perform a pipe request (step S11). The PF port entry selecting unit 140 also does not perform a pipe request when there is not an entry (B - 0) (step S10).

As described above, the PF port entry selecting unit 140 selects a request to be issued to the pipe inputting unit 200 using the values of the VAL [1:0]included in each entry, the HLD [1:0], and the RESOURCE_AVAIL. This can improve the transfer throughput between the cache memory and the main memory.

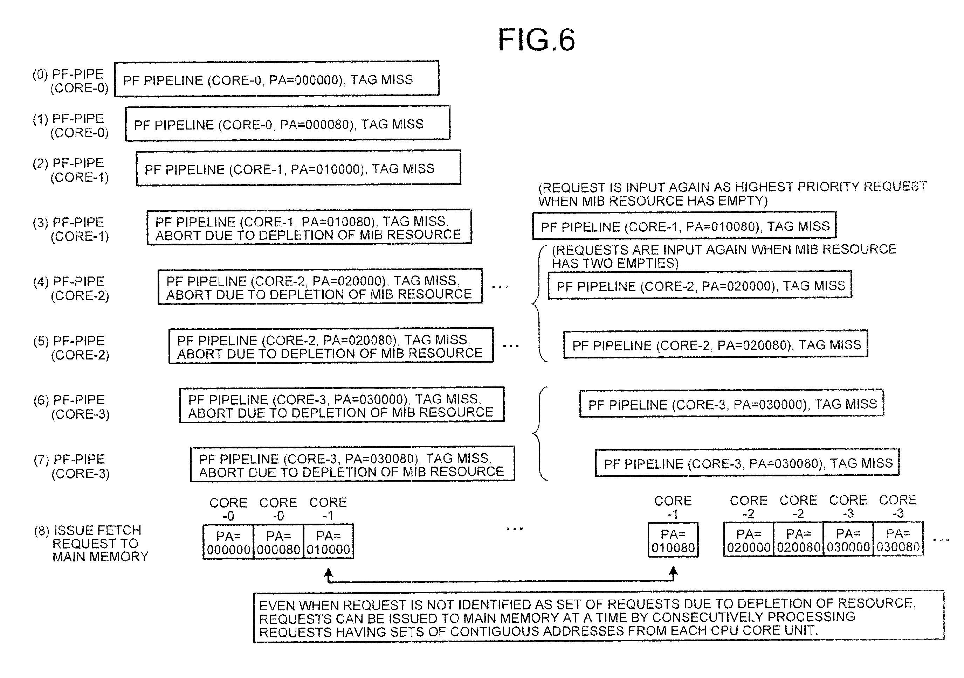

Next, another exemplary control of the cache memory control unit according to the present embodiment will be described. FIG. 6 is a view for illustrating another exemplary control of the cache memory control unit according to the present embodiment. FIG. 6 illustrates an example in which the second pre-fetch request of the expanded request from the CPU core units 10 is aborted due to the depletion in the MIB.

In such a case, the cache memory control unit according to the present embodiment inputs the aborted pre-fetch request to the L2-pipe 23 again as giving higher priority to the aborted pre-fetch request over the other pre-fetch requests when the MIB including a plurality of entries has an empty entry. Thus, the cache memory control unit according to the present embodiment can consecutively issue, to the main memory, two pre-fetch requests expanded from an expanded request from the CPU core unit 10 even when a pre-fetch request has been aborted.

Further, FIG. 6 also illustrates an example in which both of the two pre-fetch requests expanded from an expanded request from the CPU core unit 10 have been aborted due to the depletion in the MIB. In such a case, the cache memory control unit according to the present embodiment inputs the aborted pre-fetch requests to the L2-pipe 23 again after the MIB including a plurality of entries has two empties. Thus, the cache memory control unit according to the present embodiment can consecutively issue, to the main memory, two pre-fetch requests expanded from an expanded request from the CPU core unit 2 even when the two pre-fetch requests have been aborted.

Next, STREAM processing for High Performance Computing (HPC) will be described as an example in which the main memory can operate with the maximum transfer capability. In the STREAM processing, the reference data used for the operation is transferred from a set of contiguous areas in the main memory and the operation result is stored in another set of contiguous areas. At that time, the data read from the maim memory has actually been read and stored in the cache memory with the pre-fetch in advance. The data is loaded from the cache memory and is operated. Then, the operation result is stored in another set of areas in the main memory.

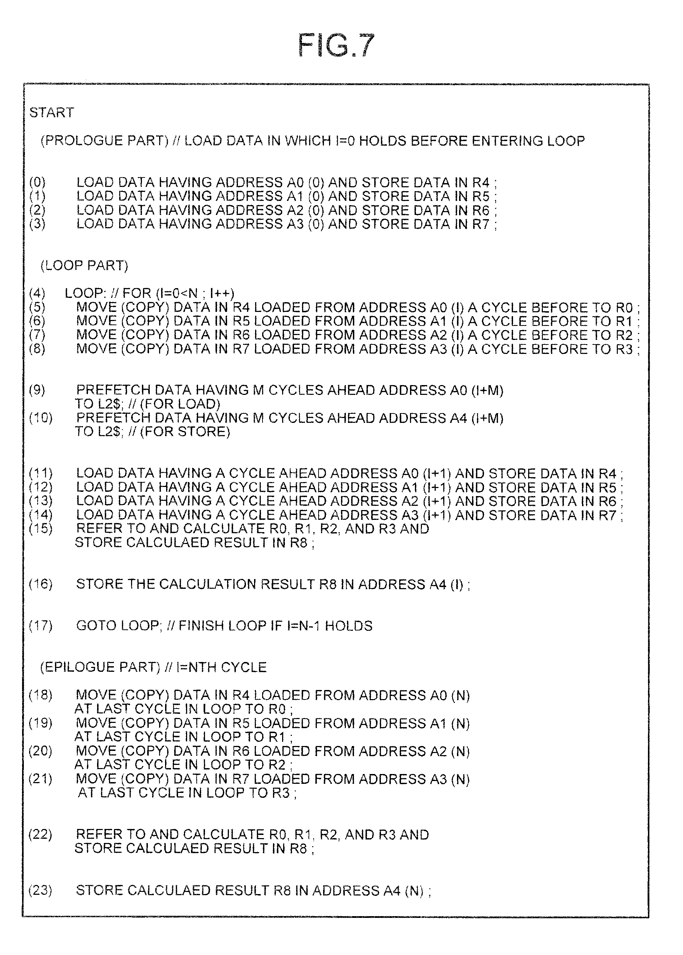

FIG. 7 is a view of an exemplary program of the STREAM processing. In the program, the address that is Loaded (and Stored) after M cycles in a loop process is pre-fetched. At that case, a number large enough to satisfy the condition in that M * {the time to perform a cycle in the loop process (clock cycle number)} > {the time from the issuance of pre-fetch to the storage of the data into the shared L2 cache unit 20 (clock cycle number)} holds is selected as the number M. Then, the time for the loop process conceals the time to access the main memory for the pre-fetch in the program. Thus, the usage of a pro-fetch becomes a performance advantage.

In the program, when the primary cache miss of the Load instruction or the Store instruction occurs, a DM request is issued to the shared L2 cache unit 20 and the MI port 22 receives the data for which the DM request has been issued. The Load instruction and the Store instruction indicate, for example, the addresses of the cache-missed eight bytes. However, the DM request to the shared L2 cache unit 20 is for whole the cache line (in this case, 128 byte data) including the cache-missed eight byte data.

After receiving the DM request from the CPU core unit 10, the shared L2 cache unit 20 performs a pipeline process. When hitting a tag, the shared L2 cache unit 20 responses the data of the hit tag to the CPU core unit 10. On the other hand, when a tag miss occurs, the shared L2 cache unit 20 issues a fetch request to the main memory, and after the data is responded, the data is responded to the CPU core units 10 and the tag of the data is registered in the L2-tag storing unit 25 and the data is registered in the L2-data storing unit 24. After receiving the data responded from the shared L2 cache unit 20, the CPU core unit 10 supplies the data to the ALU 14 waiting for the responded data and registers the tag to a primary cache memory unit and registers the data to the L1 data cache memory 13.

While the shared L2 cache unit 20 waits for the response of the DM request, another Load instruction or Store instruction sometimes indicates other eight byte addresses on the same cache line. When another Load instruction or Store instruction indicates the other eight byte addresses on the same cache line, the process is performed in the order of the procedures such that the primary cache hit occurs on the data registered after the response from the shared L2 cache unit 20, the register of the tag to the primary cache memory unit, and the register of the data to the L1 data cache memory 13. As described above, it is hardly necessary to use the transfer band of the main memory to the maximum when the cache miss of the Load instruction or the Store instruction occurs without using a pre-fetch. Thus, there is not a problem when another Load instruction or Store instruction indicates other eight byte addresses on the same cache line.

On the other hand, when the primary cache miss of a pre-fetch instruction occurs, a pre-fetch request is issued to the shared L2 cache unit 20 and the PF port 100 receives the request. The pre-fetch instruction indicates, for example, eight byte addresses. However, the request to the shared L2 cache unit 20 is for whole the cache line (in this case, 128 byte data) including the eight byte data. After receiving the pre-fetch request from the CPU core unit 10, the shared L2 cache unit 20 performs a pipeline process. When hitting a tag, the shared L2 cache unit 20 updates the LRU of the tag such that the cache line becomes "the latest" status. On the other hand, when a tag miss occurs, the shared L2 cache unit 20 issues a fetch request to the main memory and, after the data is responded, the tag of the data is registered in the L2-tag storing unit 25 and the data is registered in the L2-data storing unit 24. At that time, the data is not responded to the CPU core unit 10 in either case, when the tag is hit or when the tag is missed. This is a main difference from the DM request.

The pre-fetch instruction used in the exemplary program does not request a pre-fetch to a 128 byte cache line in a conventional manner, but requests a pre-fetch to a plurality of, for example two cache lines at a time. The pre-fetch instruction is implemented by extending, to the instruction code definition, a type of pre-fetch instructions in such a way as to pre-fetch the contiguous two cache lines of 256 bytes at a time.

Herein, a pre-Fetch instruction extended for pre-fetching two cache lines at a time as described above is referred to as an expanded pre-fetch instruction". The CPU core unit 10 issues, to the shared L2 cache unit 20, a pre-fetch request together with an attribution in that the pre-fetch request is an expanded pre-fetch instruction when the primary cache miss of the expanded pre-fetch instruction occurs. As a result of that, the shared L2 cache unit 20 can implement the control of an expanded. request as described in the present embodiment.

When it is confirmed as the exemplary program that contiguous data areas are used without a space, the transfer band of the main memory can be used to the maximum by simply replacing a conventional pre-fetch instruction to a cache line with the expanded pre-fetch instruction. At that case, a pre-fetch request is excessively (redundantly) issued to the same cache line. However, there is not a problem because the excessive request is completed by an address match with the MIB in the pipeline process.

Note that the request for pre-fetching two cache lines at a time can be obtained in a method in which, for example, an instruction executing unit or a primary cache pipeline detects the requests to contiguous addresses with hardware and unites the requests. However, there is a limitation on such a method, for example, in that the requests cannot surely be united depending on a condition of working.

Generally, defining a new instruction such as the expanded pre-fetch instruction means the change of the specification for operation. A new instruction should carefully be defined in consideration of, for example, the compatibility with past models. However, the pre-fetch instruction of the secondary cache memory unit is less influenced by such a definition. In other words, to add an expanded pre-fetch instruction, it is not necessary to change the pipeline process in the secondary cache memory unit. It is only necessary to change the input of the request to the pipeline.

Note that the configuration in which the cache control pipeline and the MAC are divided into a plurality of memory banks is sometimes applied as a method for improving the transfer efficiency of the memory or the transfer efficiency of the cache. In such a case, bits as low as possible are selected as a unit of address for dividing memory banks such that the memory banks have the same busy percentage. For example, in the division into four banks in a unit having a cache line size of 128 bytes, the division is generally performed by the two bits of the address of PA [8:7].

However, when the banks are divided by the two bits of the address of PA [8:7] while an expanded pre-fetch instruction for pre-fetching a plurality of contiguous cache lines is defined by the software, the contiguous addresses to be pre-fetched, defined by the software, are divided into the banks. Thus, it is necessary to divide the banks such that the unit for the continuous processes by the main memory and the unit for the continuous issuances of pre-fetches by software are fixed at the same bank. For example, when it is assumed that the contiguous two cache line of 256 bytes are requested, the banks should not be divided at the address of PA [7]. The banks should be divided at PA [9:8] while PA [7] is regarded as an address in the same bank.

As described above, the request storing unit 110 in the PF port 100 stores an expanded request and the PF port entry selecting unit 140 controls the two pre-fetch requests expanded from the expanded request to consecutively be input to the L2-pipe 23 in the present embodiment. Thus, the MAC 27 can consecutively issue the read requests of the contiguous two cache lines to the main memory. The main memory can improve the transfer throughput by consecutively processing the contiguous two cache lines.

Further, when only one of the expanded two pre-fetch requests has been aborted, the PF port entry selecting unit 140 controls the pre-fetch requests such that the aborted pre-fetch request is input to the L2-pipe 23 as the highest priority. Thus, the two pre-fetch requests can consecutively be input to the L2-pipe 23 without changing the control configuration of the L2-pipe 23 even when one of the expanded two pre-fetch requests has been aborted.

Further, the PF port entry selecting unit 140 receives the number of available resources from the resource managing unit 301 in order to select a pre-fetch to be input to the pipe inputting unit 200 based on the number of available resources in the present embodiment. This can prevent an abort in the L2-pipe 23 due to the depletion of resources.

Note that the case in which an entry holds two requests in the PF port 100 has been described in the present embodiment. However, the present invention is not limited to the embodiment. The present invention can similarly be applied to a case in which an entry holds another number of requests in the PF port 100. For example, when the main memory has a function to improve the transfer throughput by processing four cache lines at a time as a unit of size based on the configuration of the main memory, an entry can hold four requests in the PF port 100.

Further, the case in which an entry holds two pre-fetch requests in the PF port 100 has been described in the present embodiment. However, the present invention is not limited to the embodiment. The present invention can similarly be applied to a case in which an entry can hold a plurality of requests of cache lines in another port, for example, in the MI port 23.

Further, the case in which a tag is searched by a pipeline process in the L2-pipe 23 has been described in the present embodiment. However, the present invention is not limited to the embodiment. The present invention can similarly be applied to a case in which a tag is searched by a process except the pipeline process.

Further, the case in which the main memory has a function to improve the transfer throughput between the cache memory and the main memory by consecutively processing a plurality of contiguous cache lines has been described in the present embodiment. However, the present invention is not limited to the embodiment. The present invention can similarly be applied to a case in which the main memory has a function to improve the transfer throughput by consecutively processing a plurality of requests of the cache lines satisfying a predetermined condition by the configuration of the main memory. In that case, the expanded request is expanded into a plurality of requests to the cache lines satisfying a predetermined condition.

Further, the secondary cache memory unit has been described in the present embodiment. However, the present invention is not limited to the embodiment. The present invention can similarly be applied to a cache memory unit on another hierarchical level.

### Reference Signs List

- 1: CPU
- 2: DIMM
- 10: CPU core unit
- 11: L1 instruction cache memory
- 12: Instruction decoding/issuing unit
- 13: L1 data cache memory
- 14: ALU
- 15: MMU
- 16: L1-MIB
- 17: PFQ
- 18: MOB
- 19a: Instruction fetch pipe
- 19b: Load/store pipe
- 19c: Execution pipe
- 20: Shared L2 cache unit
- 21: MO port
- 22: MI port
- 23: L2-pipe
- 24: L2-data storing unit
- 25: L2-tag storing unit
- 26: L2-MIB
- 27: MAC
- 28: Move-in data path buffer/control unit
- 29: Move-out data path buffer/control unit
- 100: PF port
- 110: Request storing unit
- 120: Set entry selecting unit
- 130: Empty entry selecting unit
- 140: PF port entry selecting unit
- 150: entry valid signal
- 151: OR circuit
- 152: AND circuit
- 200: Pipe inputting unit
- 300: L2-pipeline control unit
- 301: Resource managing unit

## Claims

1. A processor connected to a main memory, the processor comprising:
a cache memory having a plurality of cache lines each holding data;
a request holding unit that holds a plurality of access requests to a plurality of contiguous cache lines in the cache memory while linking the requests to each other;
a control unit that consecutively issues the plurality of linked access requests to the main memory; and
a processing unit that registers a plurality of response data from the main memory in response to the plurality of consecutively issued access requests to the contiguous cache lines in the cache memory.

2. The processor according to claim 1,
wherein the linked access requests indicate address ranges of the cache lines.

3. The processor according to claim 1 or 2, further comprising:
a tag holding unit that holds information on tags of the plurality of cache lines in the cache memory,
wherein the control unit searches the information on tags held in the tag holding unit from addresses included in the access requests and consecutively issues the plurality of linked access requests to the main memory based on results from the search of the information on tags.

4. The processor according to claim 3,
wherein, when the plurality of linked access requests held in the request holding unit include a request that has been aborted by the processing unit and then a cause of the abort has been resolved, the control unit searches the information on a tag of the aborted access request again while giving higher priority to the aborted access request over other access requests.

5. The processor according to claim 1,
wherein the processing unit includes a data holding unit configured to hold the plurality of response data from the main memory in response to the consecutively issued access requests, and
the control unit consecutively issues the plurality of linked access requests held in the request holding unit to the main memory only when the data holding unit in the processing unit can hold all the data in response to the plurality of linked access requests.

6. The processor according to claim 1,
wherein the linked access requests held in the request holding unit are generated from an instruction to pre-fetch a plurality of cache lines.

7. The processor according to claim 1,
wherein a plurality of cache lines that are objects of the plurality of linked access requests held in the request holding unit are included in a same memory bank.

8. An information processing device including a main memory and a processor connected to the main memory,
wherein the processor includes:
a cache memory having a plurality of cache lines each holding data;
a request holding unit holds a plurality of access requests to contiguous cache lines among the plurality of cache lines while linking the requests to each other;
a control unit consecutively issues the plurality of linked access requests to the main memory; and
a processing unit registers a plurality of response data from the main memory in response to the plurality of consecutively issued access requests to the contiguous cache lines in the cache memory.

9. A control method of a processor connected to a main memory, the control method comprising:
a cache memory having a plurality of cache lines each holding data;
consecutively issuing, with a control unit included in the processor, a plurality of access requests held in a request holding unit included in the processor and in response to contiguous cache lines in the cache memory having a plurality of cache lines, to the main memory; and
registering, with the processing unit included in the processor, a plurality of response data from the main memory in response to the plurality of consecutively issued access requests in the contiguous cache lines in the cache memory.
